# FASCICULE DE BREVET EUROPEEN

(11) **EP 3 382 488 B1**
(45) Date de publication et mention de la délivrance du brevet: **11.08.2021**
(21) Numéro de dépôt: 17174382.6
(22) Date de dépôt: 02.06.2017
(51) Int. Cl.: G05D 1/02, G01S 11/06, G01S 5/00, G01S 5/02

(54) **CHARIOT ROBOTISÉ**
ROBOTERGESTEUERTER WAGEN
ROBOTIC CARRIAGE

(30) Priorité: 31.03.2017 FR 1752774
(43) Date de publication de la demande: 03.10.2018
(73) Titulaire: QENVI Robotics, 06560 Valbonne (FR)
(72) Inventeur: Van den Reysen, Laurent, 06370 Mouans Sartoux (FR)
(74) Mandataire: Bronchart, Quentin

(56) Documents cités:
- EP-A2- 2 590 041
- WO-A2-2016/015000
- US-A1- 2010 141 483
- US-A1- 2011 172 850

## Description

### DOMAINE DE L'INVENTION

Cette invention concerne le domaine de la robotique et de la cobotique. Cette invention concerne en particulier un système permettant de robotiser tout charriot transportant des objets et ou marchandises.

### ARRIERE-PLAN TECHNOLOGIQUE

Dans le domaine de l'assistance à l'utilisateur, un certain nombre de solutions robotisées ont été développées. En particulier, la gestion et le transport d'éléments de stock dans un entrepôt recourent de plus en plus fréquemment à une automatisation de charriots.

Des robots se déplaçant selon un parcours identifié entre les allées d'un entrepôt afin de récupérer un ou plusieurs éléments de stock sont connus. Le déplacement de ces robots est souvent supervisé soit par l'intervention d'un opérateur, soit automatiquement par un programme informatique hébergé sur un serveur centralisé. Le déplacement est spécifique à l'infrastructure et suit généralement un trajet préétabli en fonction d'un plan. Un guidage par le biais de repères répartis au sein de l'infrastructure est une autre solution connue, par exemple divulguée par le document WO 2016/015000 A2. Ces solutions imposent que les robots et/ou l'infrastructure soient spécifiquement configurés pour coopérer ensemble.

D'autres types de robots permettent de suivre un utilisateur dans ses déplacements. Une solution pour identifier et suivre de manière autonome un tel utilisateur consiste à utiliser une caméra et un système de reconnaissance de forme, embarqués sur un charriot suiveur. Ce système permet d'identifier une « cible », de verrouiller et suivre cette cible dans le champ de la caméra, et de transmettre une ou plusieurs instructions pour le guidage du charriot vers la cible.

Un tel système paraît cependant intrusif dans la mesure où la silhouette et/ou le visage de l'utilisateur sont analysés pour permettre le suivi. En outre, les éléments optiques et le traitement des données en font un système coûteux. Et ce système optique ne garantit pas que les croisements se passent sans problèmes quant à savoir qui est suivi.

Une autre solution consiste à fournir à l'utilisateur une balise communicant spécifiquement avec le chariot suiveur. Une telle solution est divulguée par le document EP 2 590 041 A2. Cette balise distante traite des signaux émis par des balises émettrices du chariot. Un positionnement précis du chariot vis-à-vis de la balise distante nécessite trois balises émettrices sur le chariot. Cela complexifie la conception et augmente le coût matériel du chariot.

Il existe donc un besoin pour une solution alternative.

Il existe plus particulièrement un besoin pour un charriot robotisé d'utilisation simple et non intrusive de sorte à être mieux accepté par son potentiel utilisateur.

Il est par ailleurs important de développer une solution économiquement raisonnable, non seulement par la simplicité et le faible coût de revient des équipements embarqués, mais également par son adaptabilité à des chariots standards déjà déployés, de sorte à pouvoir être mise en œuvre rapidement et massivement en entrepôt, en supermarché, en agriculture, en ville, pour des personnes handicapées notamment.

Un autre but de l'invention est de proposer un procédé d'utilisation d'un tel charriot robotisé qui soit simple et adaptable à différents contextes potentiellement rencontrés.

### RESUME DE L'INVENTION

Un premier aspect de l'invention concerne un chariot robotisé comprenant au moins une roue motorisée, au moins un microcontrôleur pour contrôler un moteur de ladite au moins une roue motorisée, une unité centrale de traitement de données pour générer au moins des données de pilotage et les transmettre audit au moins un microcontrôleur, une balise réceptrice pour transmettre des données à ladite unité centrale, et au moins une source d'énergie électrique pour alimenter au moins le terminal, l'unité centrale, ledit au moins microcontrôleur et le moteur de ladite au moins une roue motorisée.

Le chariot comprend en outre une première balise émettrice configurée pour émettre au moins un premier signal radiofréquence, et une deuxième balise émettrice configurée pour émettre au moins un deuxième signal radiofréquence, l'au moins un premier signal radiofréquence et l'au moins un deuxième signal radiofréquence étant émis à destination d'une balise émettrice-réceptrice distante du chariot.

La balise réceptrice est configurée pour recevoir au moins un troisième signal radiofréquence en provenance de la balise émettrice-réceptrice distante du chariot, l'au moins un troisième signal radiofréquence comprenant une donnée dépendante dudit au moins un premier signal radiofréquence et dudit au moins un deuxième signal radiofréquence émis par les première et deuxième balises émettrices, afin de transmettre à l'unité centrale au moins une donnée en fonction dudit au moins troisième signal radiofréquence reçu. La donnée dépendante comprise dans le troisième signal radiofréquence comprend une première indication de puissance dudit au moins un premier signal radiofréquence et une deuxième indication de puissance dudit au moins un deuxième signal radiofréquence

Le chariot comprend en outre un terminal intégrant la balise réceptrice. Ce terminal comprend au moins un support de mémorisation stockant un algorithme configuré pour déterminer la position relative du chariot par rapport à la balise émettrice-réceptrice en fonction des premières et deuxième indications de puissance, et d'une troisième indication de puissance dudit au moins un troisième signal radiofréquence reçu par la balise réceptrice du terminal.

Ainsi, l'invention propose une solution alternative par rapport aux charriots robotisés existants. Cette solution permet de localiser le chariot relativement à une balise émettrice-réceptrice distante et de générer des données de pilotage du charriot en fonction de sa localisation par rapport à cette balise. Cette balise émettrice-réceptrice distante peut être un terminal utilisateur porté par l'utilisateur, auquel cas le chariot est apte à suivre l'utilisateur. En complément ou en alternative, la balise émettrice-réceptrice distante peut être une balise fixe parmi un ensemble de balises fixes réparties sur une infrastructure, auquel cas le chariot est apte à se repérer vis-à-vis de l'infrastructure pour guider l'utilisateur par exemple et/ou revenir à la base. La solution proposée est ainsi adaptable à différents contextes pour offrir une gamme de services complète aussi bien à un utilisateur, tel qu'un client d'un supermarché, qu'à un professionnel du stockage ou de la grande distribution, un agriculteur ou une personne handicapée par exemple.

La localisation précise du chariot vis-à-vis de la balise émettrice-réceptrice distante est ainsi rendue possible en recourant aux seules première et deuxième balises émettrices situées sur le chariot. L'invention tire en effet parti du troisième signal émis directement par la balise émettrice-réceptrice distante, ce troisième signal contenant la troisième indication de puissance traduisant la distance entre la balise émettrice-réceptrice distante et la balise réceptrice, et contenant en outre la deuxième indication de puissance traduisant la distance entre la deuxième balise émettrice et la balise émettrice-réceptrice distante et la première indication de puissance traduisant la distance entre la première balise émettrice et la balise émettrice-réceptrice distante.

Un second aspect non revendiqué de la demande concerne un kit comprenant au moins une roue motorisée, au moins un microcontrôleur, une unité centrale de traitement, au moins une source d'énergie électrique, des première et deuxième balises émettrices et une balise réceptrice configurés pour être agencés sur une structure mécanique d'un chariot existant, voire standard. La première balise émettrice est destinée à émettre au moins un premier signal radiofréquence, et la deuxième balise émettrice est destinée à émettre au moins un deuxième signal radiofréquence, l'au moins un premier signal radiofréquence et l'au moins un deuxième signal radiofréquence étant émis à destination d'une balise émettrice-réceptrice distante du chariot. La balise réceptrice est destinée à recevoir au moins un troisième signal radiofréquence en provenance de la balise émettrice-réceptrice distante du chariot, l'au moins un troisième signal radiofréquence comprenant une donnée dépendante dudit au moins un premier signal radiofréquence et dudit au moins un deuxième signal radiofréquence émis par les première et deuxième balises émettrices, afin de transmettre à l'unité centrale au moins une donnée en fonction dudit au moins troisième signal radiofréquence reçu.

Le kit permet avantageusement de réaliser un chariot robotisé selon l'invention de manière économique.

Un troisième aspect de l'invention concerne un système comprenant un chariot tel qu'introduit ci-dessus et au moins ladite balise émettrice-réceptrice distante.

Selon une possibilité, la balise émettrice-réceptrice distante peut être alternativement le terminal utilisateur et une balise fixe de l'infrastructure. Une telle configuration permet une utilisation mixte du système. Notamment, le chariot peut suivre l'utilisateur, puis retourner après utilisation vers une base de stationnement en totale autonomie. En outre, le chariot peut guider l'utilisateur au sein de l'infrastructure en respectant une condition de proximité avec l'utilisateur. Le chariot peut aussi revenir à la base de manière autonome en suivant l'ensemble des balises équipant l'infrastructure, ladite infrastructure pouvant être un supermarché, une zone de stockage, un entrepôt ou un champ agricole par exemple.

Un quatrième aspect de l'invention concerne un procédé de pilotage du chariot robotisé dans ledit système.

Le procédé de pilotage comprend au moins une étape d'appairage, au moins une séquence d'étapes de communication et de traitement, et au moins une étape de désappairage.

L'étape d'appairage consiste à appairer au moins la balise réceptrice du chariot avec au moins la balise émettrice-réceptrice distante du chariot.

La séquence d'étapes de communication comprend l'émission des premier et deuxième signaux radiofréquence, respectivement, depuis les première et deuxième balises émettrices du chariot à destination de la balise émettrice-réceptrice, et, en retour, la réception par la balise réceptrice du chariot du troisième signal radiofréquence en provenance de ladite balise émettrice-réceptrice, ledit troisième signal radiofréquence comprenant une donnée dépendante des premier et deuxième signaux radiofréquence.

La séquence d'étapes de traitement consécutive à l'étape de communication comprend la détermination d'au moins une donnée de localisation du chariot relativement à la balise émettrice-réceptrice en fonction du troisième signal radiofréquence reçu. L'unité centrale génère ensuite, en fonction de ladite donnée de localisation et d'au moins une consigne stockée dans l'unité centrale, des données de pilotage du chariot. Ces données de pilotage sont dès lors transmises au microcontrôleur pour contrôler le moteur et actionner la roue motorisée en conséquence.

L'étape de désappairage consiste à désappairer au moins la balise réceptrice du chariot avec la balise émettrice-réceptrice distante du chariot.

Tout en étant simple d'utilisation, le procédé de pilotage rend le chariot adaptable, potentiellement automatiquement, aux différents contextes susmentionnés.

De manière optionnelle, le procédé de pilotage peut recourir à un serveur externe de manière à enrichir l'assistance qu'il permet d'offrir à l'utilisateur.

Un autre aspect non revendiqué de la demande concerne un produit programme d'ordinateur comprenant des instructions, qui lorsqu'elles sont effectuées par au moins un processeur, par exemple un processeur d'une unité centrale, pilotent l'exécution au moins de l'étape d'appairage, de la séquence d'étapes de traitement et de communication et de l'étape de désappairage du procédé selon le quatrième aspect de l'invention.

Un autre aspect non revendiqué de la demande concerne un média non-transitoire lisible par un ordinateur, comprenant des instructions, qui lorsqu'elles sont effectuées par au moins un processeur, par exemple un processeur d'une unité centrale, pilotent l'exécution au moins de l'étape d'appairage, de la séquence d'étapes de traitement et de communication et de l'étape de désappairage du procédé selon le quatrième aspect de l'invention

### BREVE INTRODUCTION DES FIGURES

D'autres caractéristiques, buts et avantages de la présente invention apparaitront à la lecture de la description détaillée qui suit, et en regard des dessins annexés donnés à titre d'exemples non limitatifs et sur lesquels :
- la figure 1 montre un mode de réalisation du chariot selon l'invention ;
- la figure 2 montre un premier mode de réalisation d'un système selon l'invention ;
- la figure 3 illustre un deuxième mode de réalisation d'un système selon l'invention ; et
- la figure 4 montre un diagramme synoptique illustrant un exemple de procédé de pilotage selon l'invention.

### DESCRIPTION DETAILLEE

L'invention selon son premier aspect comprend notamment les caractéristiques optionnelles ci-après pouvant être utilisées en association ou alternativement :
- la donnée dépendante comprend une première indication de puissance dudit au moins un premier signal radiofréquence et une deuxième indication de puissance dudit au moins un deuxième signal radiofréquence.
- le chariot comprend en outre un terminal intégrant la balise réceptrice, ledit terminal comprenant au moins un support de mémorisation stockant un algorithme configuré pour déterminer la position relative du chariot par rapport à la balise émettrice-réceptrice en fonction des premières et deuxième indications de puissance, et d'une troisième indication de puissance dudit au moins un troisième signal radiofréquence reçu par la balise réceptrice du terminal.
- l'algorithme comprend au moins un filtre, par exemple de type Kalman, configuré pour filtrer les première, deuxième et troisième indications de puissance, ledit au moins un filtre ayant préalablement été le cas échéant étalonné heuristiquement.
- L'algorithme comprend au moins un filtre configuré pour filtrer toutes indications de puissance aberrantes par rapport à un étalonnage effectué au préalable.
- l'au moins un troisième signal radiofréquence comprend en outre au moins une donnée d'orientation, telle qu'un angle, et une donnée accélérométrique, telle qu'une estimation d'une distance parcourue, de la balise émettrice-réceptrice distante du charriot.
- le terminal comprend un accéléromètre et un magnétomètre et l'algorithme est configuré pour déterminer la position relative du chariot en fonction des première, deuxième et troisième indications de puissance, de ladite au moins une donnée d'orientation et une donnée accélérométrique de la balise émettrice-réceptrice distante, et de données accélérométrique et magnétique du terminal.
- les première et deuxième balises émettrices sont réparties sur le chariot de façon à être non alignées avec la balise réceptrice.
- les première et deuxième balises émettrices et la balise réceptrice sont espacées deux à deux d'une distance supérieure à 15 cm, de préférence supérieure ou égale à 20 cm.
- le terminal comprend une interface homme-machine positionnée sur le chariot de sorte à être ergonomiquement accessible à un utilisateur du chariot.

L'objet du troisième aspect comprend notamment les caractéristiques optionnelles ci-après pouvant être utilisées en association ou alternativement :
- la balise émettrice-réceptrice distante est prise parmi un terminal utilisateur et un ensemble de balises émettrices-réceptrices fixes.
- l'unité centrale est configurée pour générer au moins des données de pilotage de sorte que le chariot suive ou guide l'utilisateur. Les balises émettrices-réceptrices fixes de l'ensemble sont le cas échéant espacées deux à deux d'une distance comprise entre 1 m et 80 m, de préférence comprise entre 10 m et 50 m.

L'objet du quatrième aspect comprend notamment les caractéristiques optionnelles ci-après pouvant être utilisées en association ou alternativement :
- une étape de saisie d'un mode d'utilisation du chariot sur l'interface homme-machine du terminal du chariot est préalable aux étapes du procédé de pilotage.
- le mode d'utilisation saisi est l'un choisi parmi un mode de suivi et un mode de guidage.
- la consigne prise en compte par l'unité centrale pour générer les données de pilotage du chariot selon le mode de suivi du procédé de pilotage comprend au moins une valeur d'éloignement maximum du chariot par rapport au terminal utilisateur.
- au moins une destination à atteindre est saisie pour piloter le chariot selon le mode de guidage du procédé de pilotage.
- au moins une étape de calcul d'itinéraire est effectuée par l'unité centrale selon le mode de guidage du procédé de pilotage, afin d'établir un trajet guidé de proche en proche depuis une localisation connue jusqu'à la destination à atteindre.
- le calcul d'itinéraire comprend une détermination d'un sous-ensemble ordonné de balises émettrices-réceptrices fixes de l'ensemble à appairer successivement.
- La détermination du sous-ensemble est au moins fonction de la localisation connue d'une balise émettrice-réceptrice fixe plus proche voisine du chariot et de la destination à atteindre.
- la consigne prise en compte par l'unité centrale pour générer les données de pilotage du chariot selon le mode de guidage comprend au moins une diminution de la valeur d'éloignement du chariot par rapport à une balise émettrice-réceptrice fixe en dessous d'une valeur-seuil.
- un retour vers une base de stationnement du chariot est effectué à la fin du procédé de pilotage.

Dans la suite, un signal radiofréquence est une onde électromagnétique modulée, en fréquence ou en impulsion, de manière à porter au moins une information.

Dans la suite, le terme « appairer » signifie établir une connexion entre deux balises, selon un protocole de communication Bluetooth® ou ZigBee® ou Wifi® ou uwb® par exemple.

Le terme « désappairer » signifie rompre la connexion entre deux balises, selon le protocole de communication Bluetooth® ou ZigBee® ou Wifi® ou uwb® par exemple. Les termes « appairage » et « désappairage » s'entendent de manière similaire aux définitions ci-dessus.

De manière générale, la présente invention concerne un chariot robotisé pouvant suivre ou guider un utilisateur ou revenir à une base prédéfinie en mode autonome. Le chariot doit donc en particulier pouvoir déterminer sa position relativement à celle de l'utilisateur, et/ou relativement à un ou plusieurs repères répartis au sein d'une infrastructure, telle qu'un entrepôt, un magasin, un parking ou un champ agricole dans laquelle le chariot est destiné à évoluer.

Nous allons à présent décrire la présente invention au travers d'un mode de réalisation non limitatif du chariot robotisé.

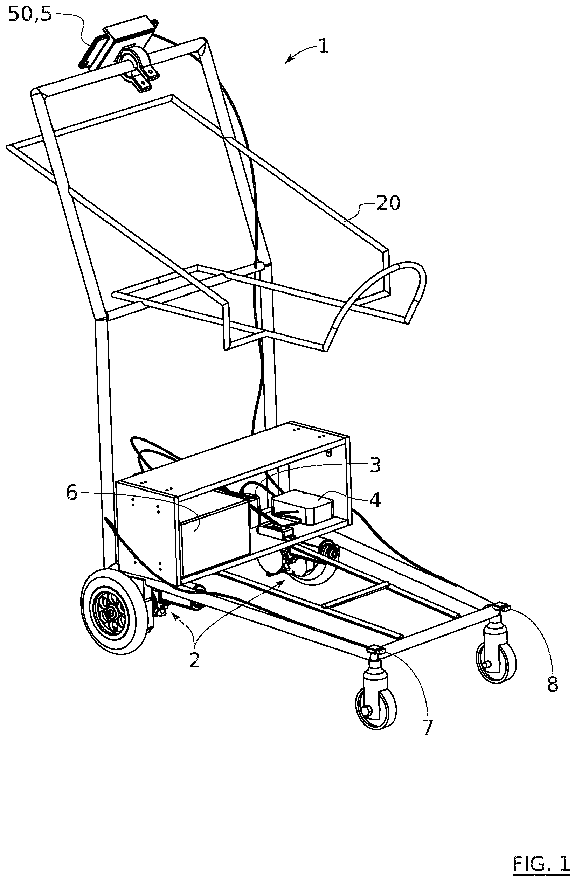

En référence à la figure 1, un mode de réalisation préféré d'un chariot 1 robotisé selon l'invention comprend une structure mécanique 20 porteuse munie de roues 2, au moins un moteur électrique entraînant au moins l'une de ces roues, et au moins une source d'alimentation 6 telle qu'une batterie. Le chariot 1 robotisé peut notamment comprendre une balise réceptrice 5 ou un terminal 50 intégrant ladite balise réceptrice 5, une unité centrale 4 de traitement, un microcontrôleur 3 et au moins une première balise émettrice 7 et une deuxième balise émettrice 8.

Typiquement, la batterie 6 alimente au moins partiellement, de préférence totalement, de façon directe ou indirecte, au moins un élément parmi l'unité centrale 4, le microcontrôleur 3, la balise réceptrice 5 et/ou le terminal 50, les balises émettrices 7, 8 et le ou les moteurs électriques des roues 2.

Dans la suite, le mode de réalisation préféré du chariot 1 fait référence au terminal 50 intégrant la balise réceptrice 5. De manière non limitative et sous réserve qu'il n'y ait pas d'incompatibilité, le chariot 1 peut comprendre uniquement la balise réceptrice 5 en lieu et place du terminal 50.

Idéalement, l'unité centrale 4 est en liaison avec le terminal 50, le microcontrôleur 3 et les première et deuxième balises émettrices 7, 8. Le microcontrôleur 3 est également en liaison avec le ou les moteurs électriques des roues 2. Cette liaison peut être filaire et utiliser différents bus informatiques par exemple. Les balises émettrices 7, 8 et le terminal 50 peuvent être reliés à l'unité centrale 4 par des connexions de type USB (Universal Serial Bus). L'unité centrale 4 et le microcontrôleur 3 peuvent être reliés par une connexion I²C (Inter-Integrated Circuit). Le microcontrôleur 3 peut être relié aux moteurs électriques des roues 2 par une connexion PWM (Pulse Width Modulation) par exemple.

L'unité centrale 4 peut être un ordinateur monocarte programmable de type Raspberry Pi par exemple. Le microcontrôleur 3 peut être supporté par une carte en licence libre telle qu'une carte Arduino par exemple. Les balises émettrices 7, 8 sont de préférence à basse consommation énergétique et peuvent notamment émettre selon le standard de communication Bluetooth®. Au moins l'une des deux balises émettrices 7, 8 peut être une balise émettrice non réceptrice. Le terminal 50 peut avantageusement être un smartphone ou une tablette numérique. Le terminal 50 comprend au moins la balise réceptrice 5 configurée pour recevoir des signaux radiofréquence. Le terminal 50 peut éventuellement émettre des signaux radiofréquences.

Une telle architecture permet notamment de réduire les coûts de production du chariot 1 robotisé.

Les première et deuxième balises émettrices 7, 8 et le terminal 50 sont espacés deux à deux d'une distance supérieure à 15 cm, de préférence supérieure ou égale à 20 cm.

Les première et deuxième balises émettrices 7, 8 peuvent être positionnées dans un premier plan sensiblement horizontal, sur une partie d'un même plan horizontal du chariot 1. Le terminal 50 peut être positionné dans un second plan sensiblement horizontal supérieur audit premier plan, sur une partie supérieure du chariot 1. Ceci pour permettre à l'utilisateur d'avoir accès aux informations du terminal 50.

La batterie 6, le microcontrôleur 3, l'unité centrale 4 et les moteurs électriques des roues 2 sont de préférence agencés sur une partie inférieure du chariot 1 pour éviter de déséquilibrer le chariot par rapport à son centre gravité.

Selon une possibilité, le chariot 1 robotisé peut comprendre au moins un capteur périphérique (non représenté), tel qu'un capteur anticollisions par exemple. Ce capteur périphérique peut être relié au microcontrôleur 3 ou à l'unité centrale 4. Le capteur peut être notamment configuré pour détecter une présence d'obstacle au-devant ou sur les côtés du chariot 1. Le cas échéant, l'utilisateur peut lui-même être considéré comme un obstacle.

Optionnellement, le terminal 50, l'unité centrale 4, les balises émettrices 7, 8, le microcontrôleur 3, le ou les moteurs électriques des roues 2, un système d'entraînement des roues 2 et le cas échéant le ou les capteurs périphériques peuvent former un kit adaptable sur différentes structures mécaniques 20 porteuses.

Le chariot 1 robotisé doit notamment pouvoir déterminer sa position relativement à celle d'un utilisateur, et/ou relativement à un ou plusieurs repères répartis au sein d'une infrastructure 10 dans laquelle le chariot 1 est destiné à évoluer.

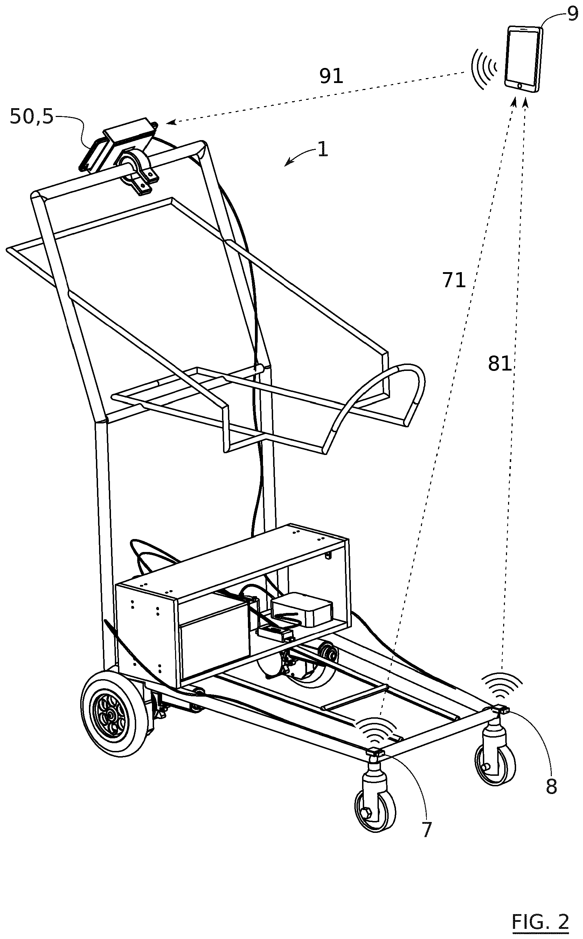

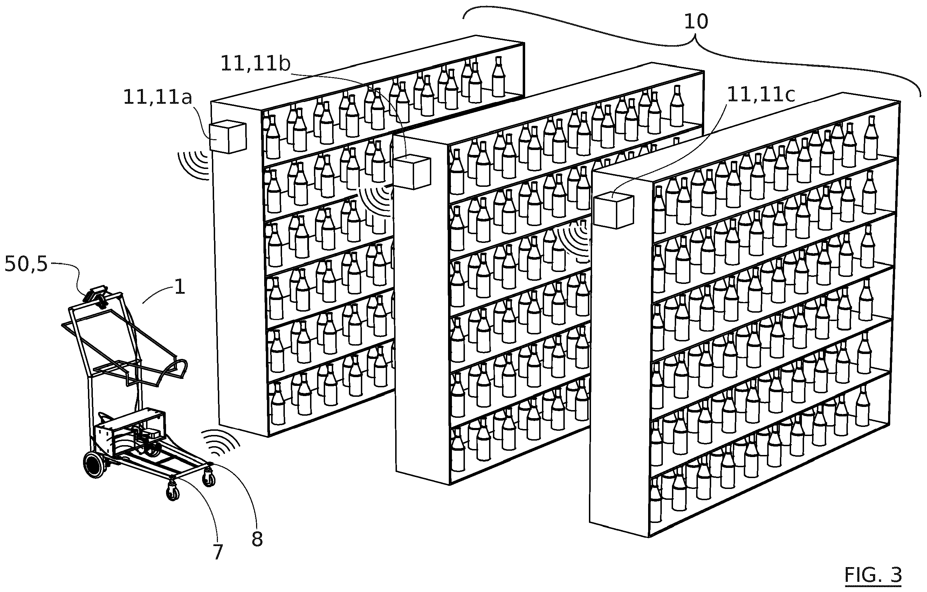

Un tel système illustré aux figures 2 et 3 peut comprendre un dispositif distant, autrement dit externe, vis-à-vis duquel le chariot 1 peut se repérer. Ce dispositif distant peut comprendre au moins l'un parmi : une balise émettrice-réceptrice 9 portée par l'utilisateur, par exemple comprise dans un smartphone de l'utilisateur, ou un ensemble de balises émettrice-réceptrices 11 fixées sur l'infrastructure 10.

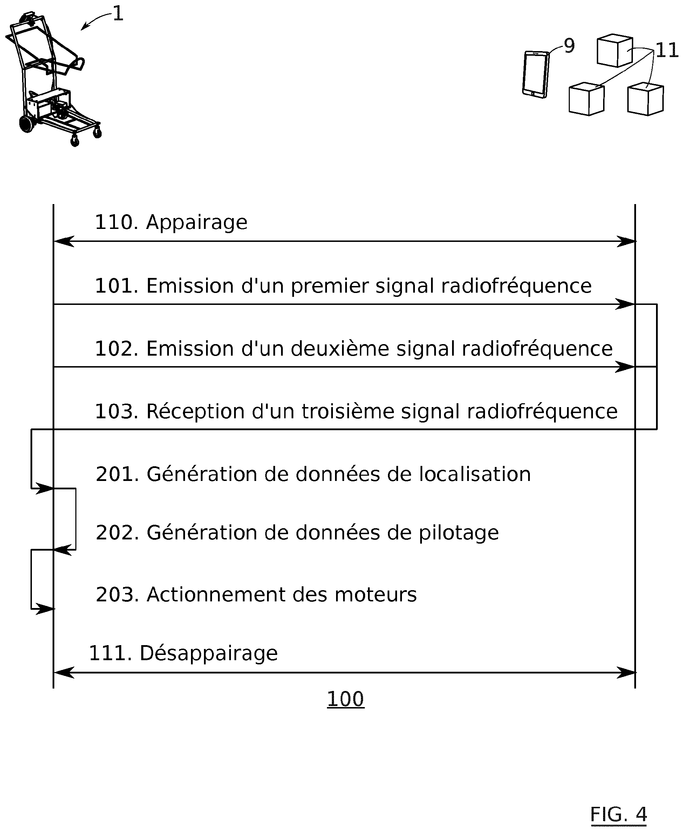

Selon un procédé de pilotage 100 particulier illustré à la figure 4 et en référence aux figures 2 et 3, le chariot 1 émet 101, 102 des signaux radiofréquence 71, 81 à destination de ladite balise émettrice-réceptrice 9, 11 distante, et reçoit 103 en retour des signaux radiofréquence 91 de la part de ladite balise émettrice-réceptrice 9, 11 distante.

Symétriquement, la balise émettrice-réceptrice 9, 11 distante est configurée pour recevoir des signaux radiofréquence 71, 81 en provenance du chariot 1 et envoyer des signaux radiofréquence 91 à destination du chariot 1.

De préférence, la première balise émettrice 7 du chariot 1 est configurée pour émettre 101 au moins un premier signal radiofréquence 71 à destination de la balise émettrice-réceptrice 9, 11 distante. Parallèlement ou simultanément, ou encore successivement, la deuxième balise émettrice 8 du chariot 1 est configurée pour émettre 102 au moins un deuxième signal radiofréquence 81 à destination de ladite balise émettrice-réceptrice 9, 11 distante. Lesdites première et deuxième balises émettrices 7, 8 émettent 101, 102 de préférence sans interruption les premier et deuxième signaux radiofréquence 71, 81, respectivement.

La balise réceptrice 5 du terminal 50 du chariot 1 est configurée pour recevoir 103 au moins un troisième signal radiofréquence 91 en provenance de la balise émettrice-réceptrice 9, 11 distante.

Une telle émission et/ou réception d'un signal peut requérir au moins un appairage entre les balises (5, 7, 8, 9, 11) concernées. Un désappairage peut être effectué après l'au moins un appairage.

Le troisième signal radiofréquence 91 peut comprendre une donnée dépendante des premier et deuxième signaux radiofréquence 81, 91 reçus par la balise émettrice-réceptrice 9, 11 distante.

Cette donnée dépendante peut avantageusement comprendre une première indication de puissance du premier signal radiofréquence 71 reçu par la balise émettrice-réceptrice 9, 11 et une deuxième indication de puissance du deuxième signal radiofréquence 81 reçu par la balise émettrice-réceptrice 9, 11.

Dès lors, le terminal 50 peut recevoir 103 au moins une première et une deuxième indication de puissance du premier et du deuxième signal radiofréquence 71, 81, et peut déterminer simultanément une troisième indication de puissance relative au troisième signal radiofréquence 91 reçu 103.

De préférence, le terminal 50 comprend un support de mémorisation numérique sur lequel est stocké un algorithme de traitement de signal, et notamment du troisième signal radiofréquence 91 reçu 103.

L'algorithme peut avantageusement effectuer des calculs en fonction des valeurs associées aux première, deuxième et troisième indications de puissance, de sorte à déterminer 201 la position du terminal 50 du chariot 1 par rapport à la balise émettrice-réceptrice 9, 11 distante.

Ces calculs peuvent comprendre au moins un filtrage sur les valeurs des indications de puissance reçues, par un filtre de type Kalman par exemple. Un autre filtrage enlève les indications de puissance aberrantes des indications reçues. Le taux de filtrage peut de préférence être choisi ou paramétré via une interface du terminal 50 par exemple. Le bruit affectant les signaux peut ainsi être avantageusement pris en compte en trouvant un bon compromis vis-à-vis de la sensibilité des balises, et en particulier de la balise réceptrice 5 équipant le terminal 50, voire de chaque balise émettrice-réceptrice 9, 11 distante.

D'autres traitements portant sur un échantillonnage, ou une dérivation des signaux par exemple peuvent également être réalisés préalablement aux calculs déterminant la position relative du terminal 50 par rapport à la balise émettrice-réceptrice 9, 11 distante.

Lesdits calculs comprennent des comparaisons d'au moins une différence Δ entre indications de puissance avec au moins une valeur limite de référence.

Une première différence Δ1 entre les valeurs (Rssi1, Rssi2) des première et deuxième indications de puissance est comparée à une valeur limite haute et une valeur limite basse.

Selon un mode de réalisation, si cette différence est strictement supérieure à la valeur limite haute, la balise émettrice-réceptrice 9, 11 est localisée à gauche du chariot 1 ; si cette différence est strictement inférieure à la valeur limite basse, la balise émettrice-réceptrice 9, 11 est localisée à droite du chariot 1 ; et si cette différence est comprise entre les valeurs limites haute et basse, la balise émettrice-réceptrice 9, 11 est localisée en face du chariot 1.

Une deuxième différence Δ2 entre les valeurs (Rssi3, Rssi2) des troisième et deuxième indications de puissance est comparée à une valeur limite haute et une valeur limite basse. Alternativement, cette deuxième différence Δ2 peut être fonction des valeurs (Rssi3, Rssi1) des troisième et première indications de puissance.

Selon un mode de réalisation, si cette deuxième différence est strictement supérieure à la valeur limite haute, la balise émettrice-réceptrice 9, 11 est localisée derrière le chariot 1. Si cette différence est strictement inférieure à la valeur limite basse, la balise émettrice-réceptrice 9, 11 est localisée devant le chariot 1.

La position de la balise émettrice-réceptrice 9, 11 relativement à celle du chariot 1 est ainsi avantageusement déterminée.

Selon une possibilité, l'algorithme est stocké sur un support de mémorisation de l'unité centrale 4. Lesdits calculs sont alors effectués par l'unité centrale 4, à partir des données transmises par la balise réceptrice 5.

Selon une possibilité, le troisième signal radiofréquence 91 comprend au moins une donnée gyroscopique, par exemple accélérométrique, et une donnée d'orientation par rapport au nord magnétique de la balise émettrice-réceptrice 9, 11 distante du charriot 1. Ces données peuvent être un angle défini relativement au nord magnétique (via un magnétomètre) et/ou une estimation de la distance parcourue (via un accéléromètre). A cette fin, le smartphone de l'utilisateur peut comprendre un accéléromètre et un compas de navigation en plus de la balise émettrice-réceptrice 9.

Ces données de distance et d'angle peuvent être comparées par l'algorithme aux données de distance et d'angle correspondantes du terminal 50 du chariot 1, afin d'améliorer la détermination de la position relative du chariot 1 par rapport à celle de la balise émettrice-réceptrice 9, 11. Une orientation relative du chariot 1 par rapport à celle de la balise émettrice-réceptrice 9, 11 peut notamment être prise en compte pour générer 202 plus précisément un ordre de pilotage.

L'ordre de pilotage est de préférence généré 202 par l'unité centrale 4 et transmis au microcontrôleur 3 qui contrôle un actionnement 203 des moteurs électriques des roues 2. L'ordre de pilotage peut comprendre différentes phases transitoires telles qu'une accélération et une décélération par exemple, de manière à rendre le déplacement du chariot 1 fluide.

L'ordre de pilotage peut dépendre de la détermination par l'algorithme de la position du chariot par rapport à la balise émettrice-réceptrice 9, 11 et d'une consigne, stockée dans l'unité centrale 4 par exemple. Cette consigne peut dépendre d'un mode d'utilisation du chariot 1 robotisé. Le mode d'utilisation peut être par exemple un mode de suivi d'un utilisateur ou un mode de guidage d'un utilisateur.

Optionnellement, l'ordre de pilotage dépend également de données provenant des capteurs périphériques anticollisions, ces données étant traitées par le microcontrôleur 3 par exemple.

Selon une première variante du procédé de pilotage 100, le chariot 1 est destiné à suivre un utilisateur.

Selon cette première variante, la balise émettrice-réceptrice 9 distante est par exemple comprise dans un smartphone porté par l'utilisateur.

Le mode d'utilisation peut être saisi par l'utilisateur via une interface du smartphone ou via une interface du terminal 50 du chariot 1, de manière à spécifier que le chariot 1 est utilisé selon le mode de suivi.

La consigne peut être dans ce cas au moins l'une parmi : une valeur d'éloignement maximum du chariot 1 par rapport à la balise émettrice-réceptrice 9 et une valeur de rapprochement maximum du chariot 1 par rapport à la balise émettrice-réceptrice 9. Par exemple, la consigne peut être une distance nominale, comprise entre 1 m et 5 m de préférence, à respecter entre le smartphone de l'utilisateur et le terminal 50 du chariot 1.

Dans ce but, l'algorithme peut mesurer une variation pour chaque différence Δ1 et Δ2. La différence Δ1 telle que définie ci-dessus correspond à un mouvement de l'utilisateur relativement au chariot 1 selon une direction latérale. La différence Δ2 telle que définie ci-dessus correspond à un mouvement de l'utilisateur relativement au chariot 1 selon une direction axiale. Une grande variation correspond potentiellement à un déplacement brusque ou rapide de l'utilisateur suivant la direction concernée. Si la variation est plus grande qu'un seuil fixé, l'ordre de pilotage est modifié de manière à respecter la consigne par exemple.

Il peut être envisagé que la valeur de consigne soit proche de la valeur de rapprochement maximum lorsque les variations de différences sont faibles. L'utilisateur est alors sensiblement à l'arrêt et le chariot 1 est proche de celui-ci, de sorte qu'il est aisé pour l'utilisateur de déposer un élément de stock dans le chariot 1 par exemple.

*A contrario*, la valeur de consigne peut être proche de la valeur d'éloignement maximum lorsque les variations de différences sont grandes. L'utilisateur est alors en déplacement et la distance nominale entre le chariot 1 et l'utilisateur est augmentée, afin d'offrir une sécurité supplémentaire pour éviter une collision accidentelle entre le chariot 1 et l'utilisateur par exemple.

L'ensemble des valeurs constantes telles que les valeurs limites, les consignes, les seuils, les taux de filtrage, les taux d'accélération et de décélération par exemple, peut être paramétrable, lors d'une phase d'étalonnage notamment. Cette phase d'étalonnage peut être conduite de façon heuristique.

Selon une possibilité, le procédé de pilotage 100 peut recourir à un serveur externe (non représenté), via le terminal 50 du chariot 1 ou le smartphone utilisateur par exemple, pour assister l'utilisateur dans une navigation ou un parcours au sein de l'infrastructure.

L'utilisateur peut envoyer au moins une requête au serveur via une interface du terminal 50 ou du smartphone, portant sur une localisation d'au moins un produit par exemple. En retour cette localisation est communiquée à l'utilisateur via l'interface, oralement ou par un affichage par exemple, de sorte que l'utilisateur peut se repérer vis-à-vis des rangées ou des rayons de l'infrastructure 10. Un parcours optimisé peut avantageusement être calculé, en fonction des produits renseignés dans la requête de l'utilisateur. Ce calcul peut être effectué par l'algorithme du terminal 50 ou par un autre algorithme stocké sur le serveur par exemple. Selon une autre possibilité, l'algorithme du terminal 50 peut également être en partie au moins stocké sur le serveur externe ou sur l'unité centrale 4 en liaison avec le terminal 50. Ce parcours optimisé est ensuite communiqué à l'utilisateur via l'interface, afin d'assister sa navigation au sein de l'infrastructure.

D'autres données stockées sur le serveur, telles qu'un état des stocks ou un inventaire par exemple, peuvent également être mises à disposition de l'utilisateur par l'intermédiaire du terminal 50 ou du smartphone. Selon une autre possibilité, le terminal 50 peut envoyer des informations de sortie de produits au serveur pour assister la gestion du stock.

Une deuxième variante du procédé de pilotage 100 du chariot 1 robotisé selon l'invention a pour but de guider l'utilisateur et/ou revenir à la base en mode autonome.

Le mode d'utilisation peut être saisi par l'utilisateur, via l'interface du smartphone ou via l'interface du terminal 50 du chariot 1, de manière à spécifier que le chariot 1 est utilisé selon le mode de guidage.

Une destination à atteindre peut notamment être saisie par l'utilisateur via ladite interface.

Selon cette deuxième variante, la balise émettrice-réceptrice 11 distante est prise parmi un ensemble de balises émettrices-réceptrices 11 fixées sur l'infrastructure par exemple. Ces balises 11 fixes forment en partie au moins un maillage de l'infrastructure 10 et sont de préférence comprises dans un même plan avantageusement parallèle à une surface sur laquelle se déplace le chariot 1. Une distance entre deux balises 11 fixes plus proches voisines est de préférence strictement inférieure à 50 m.

L'unité centrale 4 peut notamment effectuer au moins une étape de calcul d'itinéraire depuis la position du chariot 1 relativement à au moins une balise 11 fixe jusqu'à la destination à atteindre.

Le calcul d'itinéraire peut générer une liste de balises 11 fixes à appairer 110 successivement depuis l'au moins une balise 11 fixe, afin d'établir un trajet guidé de proche en proche selon le maillage de l'infrastructure 10. A cette fin, chacune des balises 11 fixes peut être identifiée par un identifiant tel qu'un numéro par exemple, qui peut notamment être porté par le troisième signal radiofréquence 91.

Une boucle conditionnelle peut ainsi permettre au chariot 1 de se déplacer par une succession d'appairages 110 de balises 11 fixes.

L'algorithme détermine la position du chariot 1 par rapport à la balise 11 fixe, selon le procédé de pilotage 100 particulier décrit précédemment.

Une consigne destinée à l'ordre de pilotage peut être dans ce cas une distance à minimiser entre le chariot 1 et la balise 11 fixe.

L'ordre de pilotage peut être assorti d'une condition telle que « appairer 110 la balise 11b fixe immédiatement suivante dans la liste de balises 11 fixes », après minimisation au moins partielle de la distance entre le chariot 1 et la balise 11a fixe avec laquelle le chariot 1 s'est d'abord appairé, par exemple.

Comme illustré sur la figure 3, le charriot 1 se déplace ainsi jusqu'à proximité de la dernière balise 11c fixe établie par la liste, guidant l'utilisateur vers la destination à atteindre. Cette destination peut être une extrémité d'un rayonnage d'entrepôt ou de magasin, d'un champ par exemple, dans lequel le produit à récupérer se trouve.

Optionnellement, une étape supplémentaire de positionnement final est envisagée afin de positionner plus précisément le chariot 1 dans le rayonnage, par exemple à proximité immédiate du produit à récupérer. Une balise 11 peut alors être avantageusement fixée sur chacune des deux extrémités opposées du rayonnage.

Cette étape de positionnement final peut notamment comprendre une succession d'appairages 110 avec au moins, alternativement, la dernière balise 11c de la liste et la balise 11 à l'extrémité opposée du rayonnage correspondant, de sorte que l'algorithme détermine la position du chariot 1 relativement à ces deux balises 11, 11c et de préférence entre ces deux balises 11, 11c.

Optionnellement, l'ordre de pilotage est en outre assujetti à une condition sur une distance maximale à respecter entre le chariot 1 et un smartphone utilisateur. Cette variante implique au moins une étape d'appairage 110 intermédiaire avec le smartphone utilisateur, de manière à contrôler la position relative de l'utilisateur vis-à-vis du chariot 1 via l'algorithme. Cette condition optionnelle permet au chariot 1 de rester à proximité raisonnable de l'utilisateur à guider. L'utilisateur peut ainsi temporiser son déplacement sans risquer de perdre le chariot 1 lui servant de guide. Dans le mode retour à la base, le chariot est autonome.

Selon une possibilité, le procédé de pilotage 100 comprend une étape de retour automatique du chariot 1 vers une base de stationnement, après utilisation en mode de suivi ou en mode de guidage.

Le retour vers la base de stationnement peut notamment comprendre une succession d'appairages 110 de balises 11 fixes, depuis une balise 11a fixe proche d'une position du chariot 1 après utilisation jusqu'à une balise fixe de stationnement.

Le chariot 1 se déplace ainsi de proche en proche, en appairant 110 successivement via le terminal 50 la balise 11 fixe proche de la position du chariot 1 après utilisation, puis une balise 11 fixe plus proche voisine de ladite balise 11 fixe, jusqu'à la balise fixe de stationnement.

Ce retour peut comprendre les étapes du procédé de pilotage 100 selon la deuxième variante. L'unité centrale 4 peut notamment effectuer un calcul d'itinéraire et générer une liste de balises 11 fixes à appairer successivement, de sorte que l'ordre de pilotage, selon une boucle conditionnelle, amène le chariot 1 à se déplacer jusqu'à la base de stationnement.

L'invention n'est pas limitée au mode de réalisation précédemment décrit mais s'étend à tous modes de réalisation entrant dans la portée des revendications annexées.

### REFERENCES

1. Chariot
2. Roues
3. Microcontrôleur
4. Unité centrale
5. Balise réceptrice
50. Terminal du chariot
6. Source d'alimentation électrique
7. Première balise émettrice
   71. Premier signal radiofréquence
8. Deuxième balise émettrice
   81. Deuxième signal radiofréquence
9. Balise émettrice-réceptrice distante du chariot
   91. Troisième signal radiofréquence
10. Infrastructure
11, 11a, 11b, 11c. Balises fixes
20. Structure métallique porteuse
100. Procédé de pilotage
   110. Appairage
      101. Emission d'un premier signal radiofréquence
      102. Emission d'un deuxième signal radiofréquence
      103. Réception d'un troisième signal radiofréquence
         201. Génération de données de localisation
         202. Génération de données de pilotage
         203. Actionnement des moteurs
   111. Désappairage

## Revendications

1. Un chariot (1) comprenant :
- au moins une roue motorisée (2),
- au moins un microcontrôleur (3) pour contrôler un moteur de ladite au moins une roue motorisée (2),
- une unité centrale (4) pour traiter des données et pour générer des données de pilotage et les transmettre audit au moins un microcontrôleur (3), et
- une balise réceptrice (5) pour transmettre les données à ladite unité centrale (4),
le chariot (1) comprenant en outre une première balise émettrice (7) configurée pour émettre au moins un premier signal radiofréquence (71), et une deuxième balise émettrice (8) configurée pour émettre au moins un deuxième signal radiofréquence (81), l'au moins un premier signal radiofréquence (71) et l'au moins un deuxième signal radiofréquence (81) étant émis à destination d'une balise émettrice-réceptrice distante (9, 11) du chariot, et
la balise réceptrice (5) étant configurée pour recevoir au moins un troisième signal radiofréquence (91) en provenance de la balise émettrice-réceptrice distante (9, 11) du chariot (1), l'au moins un troisième signal radiofréquence (91) comprenant une donnée dépendante dudit au moins un premier signal radiofréquence (71) et dudit au moins un deuxième signal radiofréquence (81) émis par les première et deuxième balises émettrices (7, 8), afin de transmettre à l'unité centrale au moins une donnée en fonction dudit au moins troisième signal radiofréquence (91) reçu, dans lequel la donnée dépendante comprend une première indication de puissance dudit au moins un premier signal radiofréquence (71) et une deuxième indication de puissance dudit au moins un deuxième signal radiofréquence (81),
le chariot étant **caractérisé en ce qu'**il comprend en outre un terminal (50) intégrant la balise réceptrice (5), ledit terminal (50) comprenant au moins un support de mémorisation stockant un algorithme configuré pour déterminer la position relative du chariot (1) par rapport à la balise émettrice-réceptrice en fonction des premières et deuxième indications de puissance, et d'une troisième indication de puissance dudit au moins un troisième signal radiofréquence (91) reçu par la balise réceptrice (5) du terminal (50).

2. Chariot (1) selon la revendication précédente, dans lequel l'au moins un troisième signal radiofréquence (91) comprend en outre au moins une donnée d'orientation et une donnée accélérométrique de la balise émettrice-réceptrice distante (9, 11) du charriot.

3. Chariot (1) selon la revendication 2, dans lequel le terminal (50) comprend un accéléromètre et un magnétomètre, l'algorithme étant en outre configuré pour déterminer la position relative du chariot (1) en fonction des première, deuxième et troisième indications de puissance, desdites au moins une donnée d'orientation et une donnée accélérométrique de la balise émettrice-réceptrice distante (9, 11), et de données accélérométrique et magnétique du terminal (50).

4. Chariot (1) selon l'une quelconque des revendications précédentes, dans lequel les première et deuxième balises émettrices (7, 8) sont réparties sur le chariot (1) de façon à être non alignées avec la balise réceptrice (5) et/ou dans lequel les première et deuxième balises émettrices (7, 8) et la balise réceptrice (5) sont espacés deux à deux d'une distance supérieure à 15 cm, de préférence supérieure ou égale à 20 cm.

5. Chariot (1) selon l'une quelconque des revendications précédentes, dans lequel le terminal (50) comprend une interface homme-machine positionnée sur le chariot (1) de sorte à permettre à un utilisateur du chariot (1) de spécifier un mode d'utilisation du chariot.

6. Système de pilotage comprenant un chariot (1) mobile selon l'une quelconque des revendications 1 à 5 et au moins une balise émettrice-réceptrice (9, 11) distante du chariot (1).

7. Système selon la revendication précédente, comprenant au moins l'un parmi un terminal utilisateur et un ensemble de balises émettrices-réceptrices (11) fixes réparties au sein d'une infrastructure (10), telle qu'un magasin ou un parking, dans laquelle le chariot (1) est destiné à évoluer, ladite balise émettrice-réceptrice (9, 11) étant comprise par l'un au moins parmi le terminal utilisateur et l'ensemble des balises émettrices-réceptrices (11) fixes.

8. Procédé de pilotage (100) d'un chariot (1) selon l'une quelconque des revendications 1 à 5, comprenant au moins les étapes suivantes :
- appairer (110) les balises émettrices (7, 8) et réceptrice (5) du chariot (1) avec une balise émettrice-réceptrice (9, 11) distante du chariot, et
- Au moins une séquence d'étapes de communication et de traitement comprenant :
∘ émettre (101, 102) au moins un premier signal radiofréquence (71) depuis la première balise émettrice (7) du chariot et au moins un deuxième signal radiofréquence (81) depuis la deuxième balise émettrice (8) du chariot, à destination de la balise émettrice-réceptrice (9, 11),
∘ recevoir (103) au niveau de la balise réceptrice (5) du chariot au moins un troisième signal radiofréquence (91) en provenance de la balise émettrice-réceptrice (9, 11),
∘ déterminer (201) au moins une donnée de localisation du chariot (1) relativement à la balise émettrice-réceptrice en fonction de l'au moins un troisième signal radiofréquence (91) reçu,
∘ traiter l'au moins une donnée de localisation du chariot (1) par rapport à la balise émettrice-réceptrice pour générer (202), en fonction de l'au moins une donnée de localisation et d'au moins une consigne stockée dans l'unité centrale (4), des données de pilotage du chariot (1), et
∘ transmettre les données de pilotage du chariot (1) à l'au moins un microcontrôleur (3) pour contrôler (203) le moteur de ladite au moins une roue motorisée (2) en conséquence, l'au moins un troisième signal radiofréquence (91) comprenant une donnée dépendante dudit au moins un premier signal radiofréquence (71) et dudit au moins un deuxième signal radiofréquence (81) émis par les première et deuxième balises émettrices (7, 8), puis
- désappairer (111) les balises émettrices (7, 8) et réceptrice (5) du chariot et la balise émettrice-réceptrice distante (9, 11) du chariot.

9. Procédé de pilotage (100) selon la revendication précédente, comprenant en outre, avant l'étape d'appairage (110) des balises (5, 7, 8) du chariot (1) avec la balise émettrice-réceptrice (9, 11), une étape de saisie d'un mode d'utilisation du chariot (1) sur une interface homme-machine d'un terminal (50) du chariot.

10. Procédé de pilotage (100) selon la revendication précédente, dans lequel, le mode d'utilisation saisi étant un mode de suivi de la balise émettrice-réceptrice (9) par le chariot (1) et la balise émettrice-réceptrice (9) étant un terminal mobile porté par un utilisateur,
la consigne prise en compte par l'unité centrale (4) pour générer les données de pilotage du chariot (1) comprend au moins une valeur d'éloignement maximum du chariot (1) par rapport à ladite balise émettrice-réceptrice (9).

11. Procédé de pilotage (100) selon la revendication 9, dans lequel, le mode d'utilisation saisi étant un mode de guidage du chariot (1) vers une destination à atteindre, la balise émettrice-réceptrice (11) étant au moins l'une parmi un ensemble de balises émettrices-réceptrices (11) fixes réparties de manière connue sur une infrastructure (10),
après l'étape de saisie du mode d'utilisation, le procédé comprend :
au moins une étape de saisie de la destination à atteindre, et
après une première étape d'appairage des balises (5, 7, 8) du chariot avec une balise émettrice-réceptrice (11a) fixe de l'ensemble plus proche voisine de la balise réceptrice (5) et avant ladite au moins une séquence d'étapes de communication et de traitement,
au moins une étape de calcul d'itinéraire comprenant une détermination, par l'unité centrale (4), d'un sous-ensemble ordonné de balises émettrices-réceptrices (11b, 11c) fixes de l'ensemble à appairer successivement, au moins en fonction d'une localisation connue de la balise émettrice-réceptrice (11a) fixe plus proche voisine à laquelle la balise réceptrice (5) du chariot est premièrement appairée et de la destination à atteindre, afin d'établir un trajet guidé de proche en proche depuis la localisation connue jusqu'à la destination à atteindre, et dans lequel
la consigne prise en compte par l'unité centrale (4) pour générer (202) les données de pilotage du chariot (1) comprend au moins une diminution d'une valeur d'éloignement du chariot (1) par rapport à ladite balise émettrice-réceptrice (11) en dessous d'une valeur-seuil.

12. Procédé de pilotage (100) selon l'une quelconque des revendications 8 à 11, comprenant en outre une dernière étape de retour vers une base de stationnement du chariot (1), dans lequel ladite dernière étape de retour comprend :
un appairage des balises (5, 7, 8) du chariot avec une balise émettrice-réceptrice (11a) fixe parmi un ensemble de balises émettrices-réceptrices (11) fixes réparties de manière connue sur une infrastructure (10), ladite balise émettrice-réceptrice (11a) fixe étant plus proche voisine de la balise réceptrice (5), et
au moins une étape de calcul d'itinéraire comprenant une détermination, par l'unité centrale (4), d'un sous-ensemble ordonné de balises émettrices-réceptrices (11b, 11c) fixes de l'ensemble à appairer (110) successivement, au moins en fonction d'une localisation connue de la balise émettrice-réceptrice (11a) fixe plus proche voisine à laquelle la balise réceptrice (5) du chariot est appairée et d'une localisation de la base de stationnement, afin d'établir un trajet guidé de proche en proche depuis la localisation connue jusqu'à la base de stationnement,
ladite dernière étape de retour comprenant au moins un appairage, au moins ladite séquence d'étapes de communication et de traitement et au moins un désappairage.

## Patentansprüche

1. Wagen (1), Folgendes umfassend:
- mindestens ein motorisiertes Rad (2),
- mindestens einen Mikro-Controller (3) zum Steuern eines Motors des mindestens einen motorisierten Rades (2),
- eine Zentraleinheit (4) zum Verarbeiten der Daten und zum Generieren der Lenkdaten und deren Übertragung zum mindestens einen Mikro-Controller (3), und
- eine Empfangsbake (5) zum Übertragen der Daten an die Zentraleinheit (4), wobei der Wagen (1) weiter eine erste Sendebake (7) umfasst, die konfiguriert ist, um mindestens ein erstes Radiofrequenzsignal (71) zu senden, und eine zweite Sendebake (8), die konfiguriert ist, um mindestens ein zweites Radiofrequenzsignal (81) zu senden, wobei das mindestens eine erste Radiofrequenzsignal (71) und das mindestens eine zweite Radiofrequenzsignal (81) in Richtung einer entfernten Sende-Empfangsbake (9, 11) des Wagens gesendet werden, und
die Empfangsbake (5) konfiguriert ist, um mindestens ein drittes Radiofrequenzsignal (91), von der entfernten Sende-Empfangsbake (9, 11) des Wagens (1) kommend, zu empfangen, wobei das mindestens eine dritte Radiofrequenzsignal (91) ein von dem mindestens einen ersten Radiofrequenzsignal (71) und dem mindestens einen zweiten Radiofrequenzsignal (81), das von der ersten und zweiten Sendebake (7, 8) gesendet wird, abhängiges Datum umfasst, um mindestens ein Datum in Abhängigkeit von dem empfangenen mindestens einen dritten Radiofrequenzsignal (91) zur Zentraleinheit zu übertragen, wobei das abhängige Datum eine erste Leistungsangabe des mindestens einen ersten Radiofrequenzsignals (71) und eine zweite Leistungsangabe des mindestens einen zweiten Radiofrequenzsignals (81) umfasst, wobei der Wagen **dadurch gekennzeichnet ist, dass** er weiter ein Terminal (50) umfasst, das die Empfangsbake (5) einbindet, wobei das Terminal (50) mindestens ein Speichermedium umfasst, das einen Algorithmus ablegt, der konfiguriert ist, um die relative Position des Wagens (1) in Bezug auf die Sende-Empfangsbake in Abhängigkeit von der ersten und zweiten Leistungsangabe, und einer dritten Leistungsangabe des mindestens einen dritten Radiofrequenzsignals (91) zu bestimmen, das durch die Empfangsbake (5) des Terminals (50) empfangen wird.

2. Wagen (1) nach dem vorstehenden Anspruch, wobei das mindestens eine dritte Radiofrequenzsignal (91) weiter mindestens ein Ausrichtungsdatum und ein Beschleunigungsmessdatum der entfernten Sende-Empfangsbake (9, 11) umfasst.

3. Wagen (1) nach Anspruch 2, wobei das Terminal (50) einen Beschleunigungsmesser und ein Magnetmesser umfasst, wobei der Algorithmus weiter konfiguriert ist, um die relative Position des Wagens (1) in Abhängigkeit von der ersten, zweiten und dritten Leistungsangabe des mindestens einen Ausrichtungsdatums und des einen Beschleunigungsmessdatums der entfernten Sende-Empfangsbake (9, 11) und von Beschleunigungs- und Magnetdaten des Terminals (50) zu bestimmen.

4. Wagen (1) nach einem der vorstehenden Ansprüche, wobei die erste und zweite Sendebake (7, 8) derart auf dem Wagen (1) verteilt sind, um nicht mit der Empfangsbake (5) ausgerichtet zu sein, und/ oder wobei die erste und zweite Sendebake (7, 8) und die Empfangsbake (5) paarweise um einen Abstand von mehr als 15 cm, vorzugsweise mehr oder gleich 20 cm beabstandet sind.

5. Wagen (1) nach einem der vorstehenden Ansprüche, wobei das Terminal (50) eine Mensch-Maschinen-Schnittstelle umfasst, die derart auf dem Wagen (1) positioniert ist, um es einem Nutzer des Wagens (1) zu ermöglichen, einen Nutzungsmodus des Wagens (1) festzulegen.

6. Lenksystem, einen beweglichen Wagen (1) nach einem der Ansprüche 1 bis 5, und mindestens eine entfernte Sende-Empfangsbake (9, 11) des Wagens (1) umfassend.

7. System nach dem vorstehenden Anspruch, mindestens eines von einem Nutzerterminal und einer Reihe von festen Sende-Empfangsbaken (11), die innerhalb einer Infrastruktur (10), wie einem Laden oder einem Parkplatz verteilt sind, umfassend, in welcher der Wagen (1) dazu bestimmt ist, sich zu bewegen, wobei die Sende-Empfangsbake (9, 11) von mindestens einem von dem Nutzerterminal und der Reihe von festen Sende-Empfangsbaken (11) verstanden wird.

8. Verfahren zum Lenken (100) eines Wagens (1) nach einem der Ansprüche 1 bis 5, mindestens die folgenden Schritte umfassend:
- Paaren (110) der Sende- (7, 8) und Empfangsbaken (5) des Wagens (1) mit einer entfernten Sende-Empfangsbake (9, 11) des Wagens, und
- mindestens eine Folge von Kommunikations- und Verarbeitungsschritten, umfassend:
∘ Senden (101, 102) mindestens eines ersten Radiofrequenzsignals (71) aus der ersten Sendebake (7) des Wagens und mindestens eines zweiten Radiofrequenzsignals (81) aus der zweiten Sendebake (8) des Wagens in Richtung der Sende-Empfangsbake (9, 11),
∘ Empfangen (103) im Bereich der Empfangsbake (5) des Wagens mindestens eines dritten Radiofrequenzsignals (91) aus der Sende-Empfangsbake (9, 11) kommend,
∘ Bestimmen (201) mindestens eines Lokalisierungsdatums des Wagens (1) in Bezug auf die Sende-Empfangsbake in Abhängigkeit von dem empfangenen mindestens einen dritten Radiofrequenzsignal (91),
∘ Verarbeiten des mindestens einen Lokalisierungsdatums des Wagens (1) in Bezug auf die Sende-Empfangsbake zum Generieren (202), in Abhängigkeit von dem mindestens einen Lokalisierungsdatum und mindestens einer in der Zentraleinheit (4) abgelegten Vorgabe, der Lenkungsdaten des Wagens (1), und
∘ Übertragen der Lenkungsdaten des Wagens (1) zu dem mindestens einen Mikro-Controller (3) zum dementsprechenden Steuern (203) des Motors des mindestens einen motorisierten Rades (2),
wobei das mindestens eine dritte Radiofrequenzsignal (91) ein von dem mindestens einen ersten Radiofrequenzsignal (71) und dem mindestens einen zweiten Radiofrequenzsignal (81), die von der ersten und zweiten Sendebake (7, 8) ausgegeben werden, abhängiges Datum umfasst, danach
- Trennen (111) der Sende- (7, 8) und Empfangsbaken (5) des Wagens und der entfernten Sende-Empfangsbake (9, 11) des Wagens.

9. Verfahren zum Lenken (100) nach dem vorstehenden Anspruch, weiter, vor dem Schritt des Paarens (110) der Baken (5, 7, 8) des Wagens (1) mit der Sende-Empfangsbake (9, 11), einen Schritt des Eingebens eines Nutzungsmodus des Wagens (1) in eine Mensch-Maschinen-Schnittstelle eines Terminals (50) des Wagens umfassend.

10. Verfahren zum Lenken (100) nach dem vorstehenden Anspruch, wobei, wenn der Nutzungsmodus ein Verfolgungsmodus der Sende-Empfangsbake (9) durch den Wagen (1) ist, und die Sende-Empfangsbake (9) ein von dem Nutzer getragenes bewegliches Terminal ist,
die von der Zentraleinheit (4) berücksichtigte Vorgabe zum Generieren der Lenkungsdaten des Wagens (1) mindestens einen maximalen Entfernungswert des Wagens (1) in Bezug auf die Sende-Empfangsbake (9) umfasst.

11. Verfahren zum Lenken (100) nach Anspruch 9, wobei, wenn der Nutzungsmodus ein Führungsmodus des Wagens (1) zu einer zu erreichenden Destination ist, die Sende-Empfangsbake (11) mindestens eine aus einer Reihe von festen Sende-Empfangsbaken (11) ist, die in bekannter Weise über eine Infrastruktur (10) verteilt sind,
das Verfahren nach dem Schritt des Eingebens eines Nutzungsmodus Folgendes umfasst:
mindestens einen Schritt des Eingebens der zu erreichenden Destination, und
nach einem ersten Paarungsschritt der Baken (5, 7, 8) des Wagens mit einer der Empfangsbake (5) nächstgelegenen benachbarten festen Sende-Empfangsbake (11a) der Reihe, und vor der mindestens einen Folge von Kommunikations- und Verarbeitungsschritten,
mindestens einen Schritt der Wegberechnung, der eine Bestimmung, durch die Zentraleinheit (4), einer geordneten Teilreihe von festen Sende-Empfangsbaken (11b, 11c) der nacheinander zu paarenden Reihe, mindestens in Abhängigkeit von einer bekannten Stelle der der Empfangsbake (5) des Wagens nächstgelegenen benachbarten festen Sende-Empfangsbake (11a) erstmals gepaart wird, und der zu erreichenden Destination, um eine geführte Fahrtstrecke nacheinander von der bekannten Stelle bis zur zu erreichenden Destination zu erstellen, und wobei die durch die Zentraleinheit (4) berücksichtigte Vorgabe zum Generieren (202) der Daten zum Lenken des Wagens (1) mindestens eine Verringerung eines Entfernungswerts des Wagens (1) in Bezug auf die Sende-Empfangsbake (11) unter einen Schwellenwert umfasst.

12. Verfahren zum Lenken (100) nach einem der Ansprüche 8 bis 11, weiter einen letzten Rückkehrschritt zu einer Abstellbasis des Wagens (1) umfassend, wobei der letzte Rückkehrschritt umfasst:
ein Paaren der Baken (5, 7, 8) des Wagens mit einer festen Sende-Empfangsbake (11a) aus einer Reihe von festen Sende-Empfangsbaken (11), die in bekannter Weise über eine Infrastruktur (10) verteilt sind, wobei die feste Sende-Empfangsbaken (11a) zur Empfangsbake (5) nächstgelegen benachbart ist, und
mindestens einen Wegberechnungsschritt, der eine Bestimmung, durch die Zentraleinheit (4), einer geordneten Teilreihe von festen Sende-Empfangsbaken (11b, 11c) der nacheinander zu paarenden (110) Reihe, mindestens in Abhängigkeit von einer bekannten Stelle der der Empfangsbake (5) des Wagens nächstgelegenen benachbarten festen Sende-Empfangsbaken (11a), und einer Stelle der Abstellbasis gepaart wird, um eine geführte Fahrtstrecke nacheinander von der bekannten Stelle bis zur Abstellbasis zu erstellen,
wobei der letzte Rückkehrschritt mindestens eine Paarung, mindestens die Folge von Kommunikations- und Verarbeitungsschritten und mindestens eine Trennung umfasst.

## Claims

1. A carriage (1) comprising:
- at least one motorised wheel (2),
- at least one microcontroller (3) for controlling a motor of said at least one motorised wheel (2),
- a central unit (4) for processing data and for generating control data and transmitting them to said at least one microcontroller (3), and
- a receiver beacon (5) for transmitting the data to said central unit (4),
the carriage (1) further comprising a first emitter beacon (7) configured to emit at least one first radiofrequency signal (71), and a second emitter beacon (8) configured to emit at least one second radiofrequency signal (81), the at least one first radiofrequency signal (71) and the at least one second radiofrequency signal (81) being emitted to a remote transceiver beacon (9, 11) of the carriage, and
the receiver beacon (5) being configured to receive at least one third radiofrequency signal (91) coming from the remote transceiver beacon (9, 11) of the carriage (1), the at least one third radiofrequency signal (91) comprising a datum dependent on said at least one first radiofrequency signal (71) and on said at least one second radiofrequency signal (81) emitted by the first and second emitter beacons (7, 8), in order to transmit to the central unit at least one datum depending on said at least one third received radio frequency signal (91), wherein the dependent datum comprises a first indication of power of said at least one first radio frequency signal (71) and a second indication of power of said at least one second radio frequency signal (81),
the carriage being **characterised in that** it further comprises a terminal (50) integrating the receiver beacon (5), said terminal (50) comprising at least one storage medium storing an algorithm configured to determine the relative position of the carriage (1) relative to the transceiver beacon based on the first and second power indications, and on a third power indication of said at least one third radiofrequency signal (91) received by the receiver beacon (5) of the terminal (50).

2. The carriage (1) according to the preceding claim, wherein the at least one third radiofrequency signal (91) further comprises at least one orientation datum and one accelerometric datum of the remote transceiver beacon (9, 11) of the carriage.

3. The carriage (1) according to claim 2, wherein the terminal (50) comprises an accelerometer and a magnetometer, the algorithm being further configured to determine the relative position of the carriage (1) based on the first, second and third power indications, of said at least one orientation datum and one accelerometric datum from the remote transceiver beacon (9, 11), and accelerometric and magnetic data from the terminal (50).

4. The carriage (1) according to any one of the preceding claims, wherein the first and second emitter beacons (7, 8) are distributed on the carriage (1) so that they are not aligned with the receiver beacon (5) and/or wherein the first and second emitter beacons (7, 8) and the receiver beacon (5) are spaced two by two by a distance greater than 15 cm, preferably greater than or equal to 20 cm.

5. The carriage (1) according to any one of the preceding claims, wherein the terminal (50) comprises a man-machine interface positioned on the carriage (1) so as to allow a user of the carriage (1) to specify a mode of use of the carriage.

6. A control system comprising a movable carriage (1) according to any one of claims 1 to 5 and at least one remote transceiver beacon (9, 11) of the carriage (1).

7. The system according to the preceding claim, comprising at least one of a user terminal and a set of fixed transceiver beacons (11) distributed within an infrastructure (10), such as a store or a parking lot, wherein the carriage (1) is intended to move, said transceiver beacon (9, 11) being comprised by at least one of the user terminal and the set of fixed transceiver beacons (11).

8. A method (100) for controlling a carriage (1) according to any one of claims 1 to 5, comprising at least the following steps:
- pairing (110) the emitter (7, 8) and receiver (5) beacons of the carriage (1) with a remote transceiver beacon (9, 11) of the carriage, and
- At least one sequence of communication and processing steps comprising:
∘ emitting (101, 102) at least one first radiofrequency signal (71) from the first emitter beacon (7) of the carriage and at least one second radiofrequency signal (81) from the second emitter beacon (8) of the carriage, to the transceiver beacon (9, 11),
∘ receiving (103) at the receiver beacon (5) of the carriage at least one third radiofrequency signal (91) coming from the transceiver beacon (9, 11),
∘ determining (201) at least one datum for locating the carriage (1) relative to the transceiver beacon based on the at least one third radiofrequency signal (91) received,
∘ processing the at least one datum for locating the carriage (1) relative to the transceiver beacon to generate (202), based on the at least one location datum and on at least one instruction stored in the central unit (4), data for controlling the carriage (1), and
∘ transmitting the data for controlling the carriage (1) to the at least one microcontroller (3) to control (203) the motor of said at least one motorised wheel (2) accordingly,
the at least one third radiofrequency signal (91) comprising a datum dependent on said at least one first radiofrequency signal (71) and on said at least one second radiofrequency signal (81) emitted by the first and second emitter beacons (7, 8), then
- unpairing (111) the emitter (7, 8) and receiver (5) beacons of the carriage and the remote transceiver beacon (9, 11) of the carriage.

9. The control method (100) according to the preceding claim, further comprising, before the step of pairing (110) the beacons (5, 7, 8) of the carriage (1) with the transceiver beacon (9, 11), a step of entering a mode of use of the carriage (1) on a man-machine interface of a terminal (50) of the carriage.

10. The control method (100) according to the preceding claim, wherein, the entered mode of use being a mode of tracking the transceiver beacon (9) by the carriage (1) and the transceiver beacon (9) being a movable terminal carried by a user,
the instruction taken into account by the central unit (4) to generate the data for controlling the carriage (1) comprises at least one value of maximum distancing of the carriage (1) from said transceiver beacon (9).

11. The control method (100) according to claim 9, wherein, the mode of use entered being a mode of guiding the carriage (1) towards a destination to be reached, the transceiver beacon (11) being at least one of a set of fixed transceiver beacons (11) distributed in a known manner over an infrastructure (10),
after the step of entering the mode of use, the method comprises:
at least one step of entering the destination to be reached, and
after a first step of pairing the beacons (5, 7, 8) of the carriage with a fixed transceiver beacon (11a) of the set closest to the receiver beacon (5) and before said at least one sequence of communication and processing steps,
at least one route calculation step comprising a determination, by the central unit (4), of an ordered subset of fixed transceiver beacons (11b, 11c) of the set to be paired successively, at least based on a known location of the fixed closest transceiver beacon (11a) with which the receiver beacon (5) of the carriage is first paired and on the destination to be reached, in order to gradually establish a guided path from the known location to the destination to be reached, and wherein
the instruction taken into account by the central unit (4) to generate (202) the data for controlling the carriage (1) comprises at least one reduction in a value of distancing of the carriage (1) from said transceiver beacon (11) below a threshold value.

12. The control method (100) according to any one of claims 8 to 11, further comprising a last step of returning to a parking base of the carriage (1), wherein said last returning step comprises:
pairing the beacons (5, 7, 8) of the carriage with a fixed transceiver beacon (11a) of a set of fixed transceiver beacons (11) distributed in a known manner over an infrastructure (10), said fixed transceiver beacon (11a) being closest to the receiver beacon (5), and
at least one route calculation step comprising a determination, by the central unit (4), of an ordered subset of fixed transceiver beacons (11b, 11c) of the set to be paired (110) successively, at least based on a known location of the fixed closest transceiver beacon (11a) with which the receiver beacon (5) of the carriage is paired and on a location of the parking base, in order to gradually establish a guided path from the known location to the parking base,
said last return step comprising at least one pairing, at least said sequence of communication and processing steps and at least one unpairing.
